# EUROPEAN PATENT SPECIFICATION

(11) **EP 3 935 704 B1**
(45) Date of publication and mention of the grant of the patent: **09.12.2026**
(21) Application number: 20705975.9
(22) Date of filing: 20.02.2020
(51) Int. Cl.: H02H 3/087, H02H 3/02, H01H 9/54, H01H 33/59

(54) **HYBRID CIRCUIT BREAKER WITH CROWBAR BRANCH**
SCHUTZSCHALTER
DISJONCTEUR

(30) Priority: 06.03.2019 GB 201903018
(43) Date of publication of application: 12.01.2022
(73) Proprietor: Eaton Intelligent Power Limited, Dublin 4 (IE); Direct Current B.V., 1432 AH Aalsmeer (NL)
(72) Inventor: NIEHOFF, Ronald, 7577 MB Oldenzaal (NL); STOKEMAN, Harry, 1431 XP Aalsmeer (NL)
(74) Representative: Derry, Paul Stefan
(86) International application number: PCT/EP2020/054428
(87) International publication number: WO 2020/178032

(56) References cited:
- CN-A- 105 680 411
- US-A1- 2013 329 329
- US-A1- 2014 313 628
- US-A1- 2016 322 809

## Description

The invention relates to a hybrid circuit breaker for interrupting a current in an electrical circuit line, the hybrid circuit breaker comprising:
- an input terminal for connection to a power line and an output terminal for connection to a DC system;
- a first solid state switching device connected to the input terminal;
- a mechanical isolator relay arranged in series with the first solid state switching device and connected to the output terminal.

Such a hybrid circuit breaker is for example known from US 4618906. This publication discloses a hybrid solid state/mechanical switch, which has a mechanical switch and a circuit breaking device, such as a fuse, arranged in series in the electrical circuit line. The mechanical switch is typically operated to break the circuit upon the occurrence of a short in the DC system.

However, if the mechanical switch fails to break the circuit, a crowbar circuit, arranged between the fuse and the mechanical switch, is operated to cause the fuse to blow.

US 2016/322809 A1 discloses a direct current circuit breaker which includes main circuit for carrying a main-path current, and a transient circuit for carrying a transient-path current. The main circuit includes a first solid state switch and a main contactor. The first solid state switch is coupled in series with the main contactor. The transient circuit is coupled in parallel with the main circuit. The transient circuit includes an auxiliary contactor coupled in series with a second solid state switch. The second solid state switch closes when the main-path current exceeds a first threshold. The first solid state switch then opens. The main contactor opens when the main-path current falls below a second threshold. Then the second solid state switch opens. The auxiliary contactor opens when the transient-path current falls below the second threshold and after the second solid state switch opens.

US 2013/329329 A1 discloses an electrical power distribution system (EPDS) for an aircraft, the EPDS may include a DC bus, a power source port, a solid state power controller (SSPC) of a first type interposed between the power source port and the DC bus, at least one load port and an SSPC of a second type interposed between the load port and the DC bus. Power input to the SSPC of the first type may be connected to a unidirectional solid state switching device (SSSD) of the SSPC of the first type. The SSPC of the first type may have forward and reverse current conducting capability and forward and reverse current blocking capability. Power input to the SSPC of the second type may be connected to a unidirectional SSSD of the SSPC of the second type. The SSPC of the second type may have forward and reverse current conducting capability and capability of blocking current from only one direction.

WO 2017220443 discloses a hybrid circuit breaker, in which both electrical lines are interrupted by a mechanical switch. Mechanical switches have a number of disadvantages when used as a circuit breaker for DC systems. The opening of a mechanical switch takes a relative long time and during opening arcing can occur between the mechanical contacts of the switch.

In particular with DC systems operating at voltages over 200V DC, a fast circuit breaking is necessary, typically below 10 milliseconds and more preferred in the range of 1 - 3 milliseconds, when for example a direct touch contact occurs. A mechanical switch is for such required fast switching times too slow.

Furthermore, the use of a mechanical switch can lead to arcing during opening of the switch, as already identified in the closest prior art. On the other hand, a mechanical switch does provide a reliable interruption of a circuit.

Semiconductor switches do not have the disadvantages of mechanical switches and have the advantage that switching times are generally substantially faster compared to mechanical switches. However, semiconductor switches do dissipate energy and are not allowed by industry standards to isolate a DC system.

Within a DC system multiple sources could be present, such that breaking the connection with one source does not necessarily provides a safe DC system.

The invention is set out in the appended set of claims. It is an object of the invention to reduce or even remove the above mentioned disadvantages. This object is achieved with a hybrid circuit breaker comprising
- an input terminal for connection to a power line and an output terminal for connection to a DC system;
- a first solid state switching device;
- a mechanical isolator relay arranged in series with the first solid state switching device;
- a crowbar circuit electrically connected between the output terminal and ground or mid-pole;
- a controller for controlling the first solid state switching device, the mechanical isolator relay and the crowbar circuit.

With the hybrid circuit breaker according to the invention, the first solid state switching device allows for a fast interruption of the power to the DC system. The crowbar circuit allows for the discharge and shortening of the DC system, such that no current flows through the mechanical isolator relay and the mechanical isolator relay can be opened to provide a reliable interruption of the circuit.

The controller allows for a controlled actuation of the first solid state switching device, the crowbar circuit and the mechanical isolator relay, such that the hybrid circuit breaker can quickly interrupt the power supply to the DC system and also the power supply can be switched back on reliably.

When for example a short occurs in the DC system, the controller will control the first solid state switching device and the mechanical isolator relay to an open position, while the crowbar circuit is simultaneously activated. As the switching time of the solid state switching device and the crowbar circuit are substantially shorter, substantial less or no current will flow through the mechanical isolator relay when it starts to open. This will reduce or prevent any arcing in the mechanical isolator relay.

The mechanical isolator relay connects in a connected position the first solid state switching device with the output terminal and connects in a disconnected position the output terminal to ground or mid-pole.

By connecting the output terminal by the isolator relay breaker to ground or mid-pole additional safety is provided. This allows the hybrid circuit breaker also to be used to disconnect the DC system from the power supply for maintenance to the DC system.

In yet another embodiment of the hybrid circuit breaker according to the invention the crowbar circuit comprises arranged in series a second solid state switching device and a resistor.

With the second solid state switching device a quick activation of the crowbar circuit is obtained, within the same time range as the first solid state switching device and well ahead of the switching time of the mechanical isolator relay.

Preferably, the solid state switching device, either the first and/or the second, comprises a semiconductor like a FET, MOSFET or IGBT.

In yet a further embodiment of the hybrid circuit breaker according to the invention, the controller comprises a current sensor for sensing an overcurrent or short circuit in the DC system.

With the current sensor the current in the electrical circuit line is measured and when the current exceeds a threshold, the controller controls the first solid state switching device, the crowbar circuit and the mechanical isolator relay to switch off the power supply to the DC system and to prevent further damage by the exceeding current.

In still a further embodiment of the hybrid circuit breaker according to the invention the mechanical isolator relay is a double-pole relay of which a first pole is arranged between the first solid state switching device and the output terminal, the hybrid circuit breaker further comprising a second input terminal for connection to a mid-pole line and a second output terminal for connection to a DC system, wherein the second pole is electrically arranged between the second input terminal and the second output terminal.

By also breaking the mid-pole line of the DC system further safety is obtained.

These and other features of the invention will be elucidated in conjunction with the accompanying drawings.

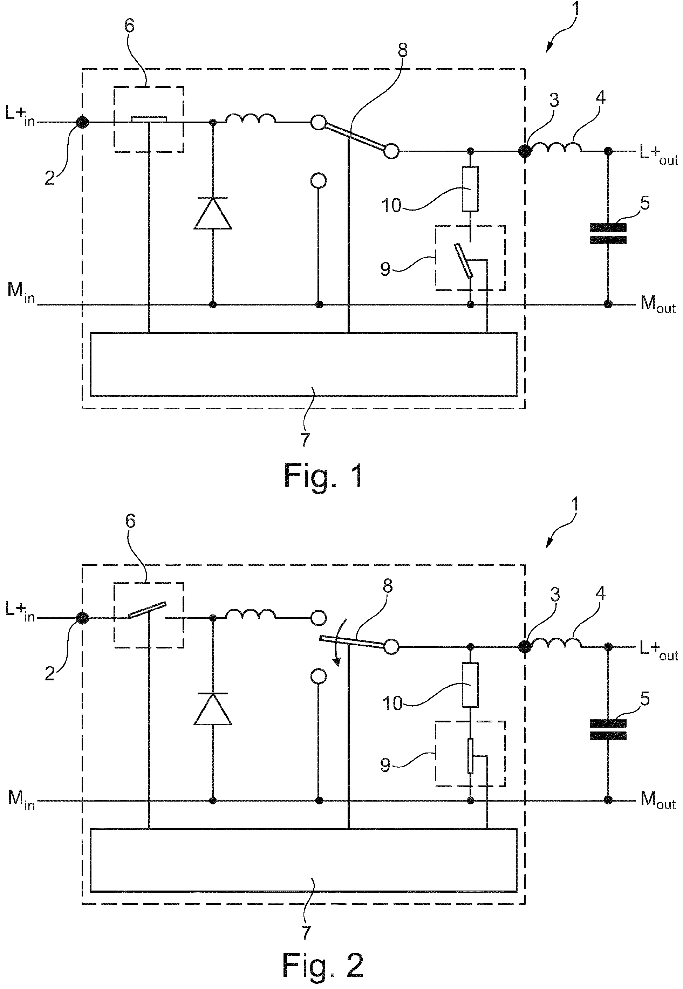

Figures 1 - 3 show an embodiment of the hybrid circuit breaker according to the invention in three different states.

Figure 1 shows an embodiment of an hybrid circuit breaker 1 according to the invention during normal use. The hybrid circuit breaker 1 has an input terminal 2 connected to a DC power source and an output terminal 3 connected to a DC system 4, 5 schematically depicted as a coil 4 and capacitor 5.

The hybrid circuit breaker 1 has furthermore a first solid state switching device 6 connected to the input terminal 2. This solid state switching device 6 comprises preferably a semiconductor like a FET, MOSFET or IGBT, which is controlled by a controller 7. A mechanical isolator relay 8 is arranged in series with the first solid state switching device 6 and connected to the output terminal 3. Also the mechanical isolator relay 8 is controlled by the controller 7.

Furthermore, a crowbar circuit, comprising arranged in series a second solid state switching device 9 and a resistor 10, is arranged between the output terminal 3 and ground. The second solid state switching device 9, preferably a semiconductor like a FET, MOSFET or IGBT, is also controlled by the controller 7.

In figure 1 the hybrid circuit breaker 1 is shown during normal use in which the DC system 4, 5 is supplied with power from the DC power source. To this end, the first semiconductor switch 6 and the mechanical isolator relay 8 are controlled by the controller 7 to an electrically closed position, while the second semiconductor switch 9 is kept in an electrically open position.

Figure 2 shows the hybrid circuit breaker 1 in case a short is detected by the controller 7. In such an occasion the controller 7 will control the first semiconductor switch 6 and the mechanical isolator relay 8 to an electrically open position and the second semiconductor switch 9 to an electrically closed position.

Opening the semiconductor switch 6 will cut off the power supply to the DC system 4, 5. The closing of the second semiconductor switch 9 will activate the crowbar circuit 9, 10 such that any energy in the DC system 4, 5 will be drained to ground.

As the power supply is cutoff and the crowbar circuit 9, 10 is activated the mechanical circuit breaker 8 is isolated, such that during the opening cycle, which takes substantial more time than opening or closing the semiconductor switches 6, 9, no arcing can take place.

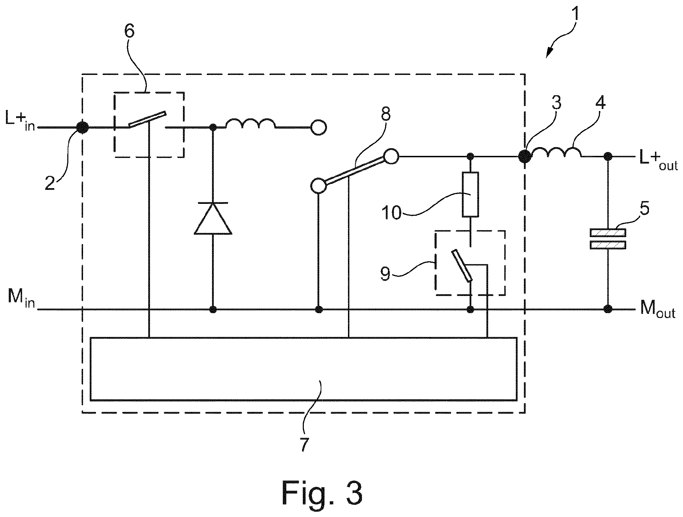

Figure 3 shows the hybrid circuit breaker 1 after the opening cycle of the mechanical isolator relay 8 has completed. To provide additional safety, for example during maintenance of the DC system 4, 5, the mechanical isolator relay 8 connects the output terminal 3 to ground the open position of the circuit breaker 8.

Once the mechanical isolator relay 8 is in the full open position, the first and second semiconductor switches **6,** 9 could be controlled to an electrically open position if desired.

## Claims

1. Hybrid circuit breaker (1) for interrupting a current in an electrical circuit line, the hybrid circuit breaker (1) comprising:
- an input terminal (2) for connection to a power line and an output terminal (3) for connection to a DC system (4, 5);
- a first solid state switching device (6);
- a mechanical isolator relay (8) arranged in series with the first solid state switching device (6);
- a crowbar circuit (9, 10) electrically connected between the output terminal (3) and ground or mid-pole (M);
- a controller (7) for controlling the first solid state switching device (6), the mechanical isolator relay (8) and the crowbar circuit (9, 10);
**characterized in that**
- the first solid state switching device (6) is connected to the input terminal (2);
the mechanical isolator relay (8) is connected to the output terminal (3) and
the mechanical isolator relay (8) connects in a connected position the first solid state switching device (6) with the output terminal (3) and connects in a disconnected position the output terminal (3) with ground or mid-pole (M).

2. Hybrid circuit breaker (1) according to claim 1, wherein the crowbar circuit (9, 10) comprises arranged in series a second solid state switching device (9) and a resistor (10).

3. Hybrid circuit breaker (1) according to claim 1 or 2, wherein the solid state switching device (6, 9) comprises a semiconductor like a FET, MOSFET or IGBT.

4. Hybrid circuit breaker (1) according to any of the preceding claims, wherein the controller (7) comprises a current sensor for sensing a short in the DC system (4, 5).

5. Hybrid circuit breaker (1) according to any of the preceding claims, wherein the mechanical isolator relay is a double-pole isolator relay of which a first pole is arranged between the first solid state switching device (6) and the output terminal (3), the hybrid circuit breaker (1) further comprising a second input terminal for connection to a mid-pole (M) line and a second output terminal for connection to a DC system (4, 5), wherein the second pole is electrically arranged between the second input terminal and the second output terminal.

## Patentansprüche

1. Hybrider Schutzschalter (1) zum Unterbrechen eines Stroms in einer Leitung eines elektrischen Kreises, wobei der hybride Schutzschalter (1) Folgendes umfasst:
- eine Eingangsklemme (2) zur Verbindung mit einer Leistungsleitung und eine Ausgangsklemme (3) zur Verbindung mit einem DC-System (4, 5);
- eine erste Festkörperschaltvorrichtung (6);
- ein mechanisches Trennrelais (8), das in Reihe mit der ersten Festkörperschaltvorrichtung (6) angeordnet ist;
- eine Klemmschaltung (9, 10), die elektrisch zwischen der Ausgangsklemme (3) und der Masse oder dem Mittelpol (M) verbunden ist;
- eine Steuerung (7) zum Steuern der ersten Festkörperschaltvorrichtung (6), des mechanischen Trennrelais (8) und der Klemmschaltung (9, 10);
**dadurch gekennzeichnet, dass**
- die erste Festkörperschaltvorrichtung (6) mit der Eingangsklemme (2) verbunden ist;
das mechanische Trennrelais (8) mit der Ausgangsklemme (3) verbunden ist und
das mechanische Trennrelais (8) in einer verbundenen Position die erste Festkörperschaltvorrichtung (6) mit der Ausgangsklemme (3) verbindet und in einer getrennten Position die Ausgangsklemme (3) mit der Masse oder dem Mittelpol (M) verbindet.

2. Hybrider Schutzschalter (1) nach Anspruch 1, wobei die Klemmschaltung (9, 10) eine zweite Festkörperschaltvorrichtung (9) und einen Widerstand (10) umfasst, die in Reihe angeordnet sind.

3. Hybrider Schutzschalter (1) nach Anspruch 1 oder 2, wobei die Festkörperschaltvorrichtung (6, 9) einen Halbleiter wie einen FET, MOSFET oder IGBT umfasst.

4. Hybrider Schutzschalter (1) nach einem der vorhergehenden Ansprüche, wobei die Steuerung (7) einen Stromsensor zum Erfassen eines Kurzschlusses in dem DC-System (4, 5) umfasst.

5. Hybrider Schutzschalter (1) nach einem der vorhergehenden Ansprüche, wobei das mechanische Trennrelais ein doppelpoliges Trennrelais ist, von dem ein erster Pol zwischen der ersten Festkörperschaltvorrichtung (6) und der Ausgangsklemme (3) angeordnet ist, wobei der hybride Schutzschalter (1) ferner eine zweite Eingangsklemme zur Verbindung mit einer Mittelpol(M)-Leitung und eine zweite Ausgangsklemme zur Verbindung mit einem DC-System (4, 5) umfasst, wobei der zweite Pol elektrisch zwischen der zweiten Eingangsklemme und der zweiten Ausgangsklemme angeordnet ist.

## Revendications

1. Disjoncteur hybride (1) pour interrompre un courant dans une ligne de circuit électrique, le disjoncteur hybride (1) comprenant :
- une borne d'entrée (2) pour la connexion à une ligne d'alimentation et une borne de sortie (3) pour la connexion à un système CC (4, 5) ;
- un premier dispositif de commutation à semi-conducteurs (6) ;
- un relais d'isolateur mécanique (8) agencé en série avec le premier dispositif de commutation à semi-conducteurs (6) ;
- un circuit de limitation de courant (9, 10) connecté électriquement entre la borne de sortie (3) et la masse ou le pôle intermédiaire (M) ;
- un dispositif de commande (7) pour commander le premier dispositif de commutation à semi-conducteurs (6), le relais d'isolateur mécanique (8) et le circuit de limitation de courant (9, 10) ;
**caractérisé en ce que**
- le premier dispositif de commutation à semi-conducteurs (6) est connecté à la borne d'entrée (2) ;
le relais d'isolateur mécanique (8) est connecté à la borne de sortie (3) et
le relais d'isolateur mécanique (8) connecte dans une position connectée le premier dispositif de commutation à semi-conducteurs (6) à la borne de sortie (3) et connecte dans une position déconnectée la borne de sortie (3) à la masse ou au pôle intermédiaire (M).

2. Disjoncteur hybride (1) selon la revendication 1, dans lequel le circuit de limitation de courant (9, 10) comprend, agencé en série, un second dispositif de commutation à semi-conducteurs (9) et une résistance (10).

3. Disjoncteur hybride (1) selon la revendication 1 ou 2, dans lequel le dispositif de commutation à semi-conducteurs (6, 9) comprend un semi-conducteur comme un FET, MOSFET ou IGBT.

4. Disjoncteur hybride (1) selon l'une quelconque des revendications précédentes, dans lequel le dispositif de commande (7) comprend un capteur de courant pour détecter un court-circuit dans le système CC (4, 5).

5. Disjoncteur hybride (1) selon l'une quelconque des revendications précédentes, dans lequel le relais d'isolateur mécanique est un relais d'isolateur à double pôle dont un premier pôle est agencé entre le premier dispositif de commutation à semi-conducteurs (6) et la borne de sortie (3), le disjoncteur hybride (1) comprenant en outre une seconde borne d'entrée pour la connexion à une ligne de pôle intermédiaire (M) et une seconde borne de sortie pour la connexion à un système CC (4, 5), dans lequel le second pôle est électriquement agencé entre la seconde borne d'entrée et la seconde borne de sortie.
